# EUROPEAN PATENT APPLICATION

(11) **EP 4 503 523 A1**
(43) Date of publication of application: **05.02.2025**
(21) Application number: 23880087.4
(22) Date of filing: 05.10.2023
(51) Int. Cl.: H04L 12/28, G16Y 10/80, G16Y 40/30

(54) **ELECTRONIC DEVICE FOR MAPPING IDENTIFICATION INFORMATION AND CUSTOM INFORMATION, AND METHOD FOR CONTROLLING SAME**

(30) Priority: 19.10.2022 KR 20220134762
(71) Applicant: Samsung Electronics Co., Ltd., Suwon-si, Gyeonggi-do 16677 (KR)
(72) Inventor: CHOI, Yoonhee, Suwon-si, Gyeonggi-do 16677 (KR); HAN, Seongjoo, Suwon-si, Gyeonggi-do 16677 (KR); KA, Keehwan, Suwon-si, Gyeonggi-do 16677 (KR)
(74) Representative: Gulde & Partner
(86) International application number: PCT/KR2023/015318
(87) International publication number: WO 2024/085508

(57) **Abstract**

An electronic device and a control method thereof are provided. The electronic device includes a communication interface and at least one processor. The at least one processor obtains identification information of an object. The at least one processor controls the communication information to receive operation-related information of a household appliance. The at least one processor maps setting information selected from among the obtained operation-related information of the household appliance to the obtained identification information of the object.

## Description

### Technical Field

The disclosure relates to an electronic device for mapping identification information and custom information, and a control method thereof.

### Background Art

With the advancement of electronic technology, various types of electronic devices are being used. An electronic device which has recently been used may be a newly developed electronic device. Alternatively, the electronic device that has been recently used may be a device that has performed a mechanical operation but may be classified as an electronic device when electronic components are included therein.

For example, the electronic device may include household appliances for convenience of home life, such as a refrigerator, a washing machine, a dryer, an air conditioner, a TV set, a microwave, an electric range, and an airdresser. The electronic device may include a desktop computer, a laptop computer, a smart phone, a tablet PC, or the like, which performs various functions. In addition, the electronic device may include a device, such as a server, which stores and quickly processes a large amount of data.

In the past, generally, electronic devices each independently perform a function. However, with the development of communication technology, a case in which various types of electronic devices are communicatively connected to each other to perform functions in cooperation with each other is increasing. The electronic devices communicatively connected to each other may perform functions while sharing roles according to the amount of data to be processed, and may quickly output a result by processing data in parallel. In addition, a central electronic device may store a large amount of various data, and a terminal electronic device may obtain necessary data from the central electronic device and perform a function when necessary.

### TECHNICAL SOLUTION

An electronic device according to one or more embodiments of the disclosure may include a communication interface and at least one processor. The at least one processor may obtain identification information of an object. The at least one processor may control the communication interface to receive operation-related information of a household appliance. The at least one processor may map setting information, which is selected from among the obtained operation-related information of the household appliance, to the obtained identification information of the object.

A control method of an electronic device according to one or more embodiments of the disclosure may obtain identification information of an object. The control method may include receiving operation-related information of a household appliance. The control method may include mapping setting information selected from among the obtained operation-related information of the household appliance to the obtained identification information of the object.

### DESCRIPTION OF DRAWINGS

FIG. 1 is a diagram illustrating a system according to one or more embodiments of the disclosure;
FIG. 2 is a block diagram illustrating a configuration of an electronic device according to one or more embodiments of the disclosure;
FIG. 3 is a detailed block diagram illustrating a configuration of an electronic device according to one or more embodiments of the disclosure;
FIGS. 4A to 4C are diagrams for describing a process of mapping identification information and setting information to each other according to one or more embodiments of the disclosure;
FIGS. 5A to 5C are diagrams illustrating a process of obtaining identification information and operating a household appliance according to one or more embodiments of the disclosure;
FIG. 6 is a diagram illustrating a process of mapping identification information and setting information of a plurality of objects to each other according to one or more embodiments of the disclosure;
FIG. 7 is a diagram illustrating a process of mapping voice information to identification information according to one or more embodiments of the disclosure;
FIG. 8 is a diagram illustrating a process of operating a household appliance using setting information according to one or more embodiments of the disclosure;
FIGS. 9A to 9C are diagrams illustrating common information according to one or more embodiments of the disclosure;
FIG. 10 is a diagram illustrating a process of operating a household appliance using a captured image according to one or more embodiments of the disclosure;
FIG. 11 is a diagram illustrating a process of operating a household appliance by photographing an object according to one or more embodiments of the disclosure;
FIGS. 12A to 12C are diagrams illustrating operation-related information of a household appliance according to one or more embodiments of the disclosure;
FIGS. 13A and 13B are diagrams illustrating a process of estimating components of clothes and providing a notification to a user according to one or more embodiments of the disclosure.
FIGS. 14A and 14B are diagrams illustrating a process of estimating a component of food and providing a notification to a user according to one or more embodiments of the disclosure;
FIG. 15 is a flowchart of a control method of an electronic device according to one or more embodiments of the disclosure;
FIG. 16 is a flowchart of a process of registering setting information according to one or more embodiments of the disclosure; and
FIGS. 17 and 18 are flowcharts of a process of operating a household appliance according to setting information according to one or more embodiments of the disclosure.

### MODE FOR INVENTION

Hereinafter, one or more embodiments will be described in more detail with reference to the accompanying drawings. Embodiments set forth herein may be variously modified. Example embodiments may be illustrated in the drawings and described in detail in the detailed description. However, the embodiments illustrated in the accompanying drawings are only intended to help understanding of the one or more embodiments. Therefore, the technical scope of the disclosure is not limited by the embodiments illustrated in the accompanying drawings and should be understood to include all equivalents or alternatives within the spirit and scope of the disclosure.

Terms, including ordinal numbers such as first and second, may be used to describe various components but these components are not limited by the terms. The terms are only used to distinguish one component from another.

It should be understood that the terms "comprise" and/or "comprising", when used herein, specify the presence of stated features, integers, steps, operations, elements, components, or a combination thereof, but do not preclude the presence or addition of one or more features, integers, steps, operations, elements, components, or a combination thereof. When a component is referred to as being "coupled to" or "connected" to another component, it should be understood that the component may be directly coupled to or connected to the other component but another component may be interposed therebetween. In contrast, when a component is referred to as being "directly coupled" or "directly connected" to another component, it should be understood that no component is interposed therebetween.

Meanwhile, the term "module" or "unit", when used herein to describe components, should be understood as performing at least one function or operation. In addition, the "module" or "unit" may perform a function or operation by hardware, software, or a combination of hardware and software. A plurality of "modules" or a plurality of "units" may be integrated into at least one module, excluding "modules" or "units" that should be performed by certain hardware or at least one processor. As used herein, the singular expressions are intended to include plural forms as well, unless the context clearly dictates otherwise.

In the following description of the disclosure, an order of operations should be understood unrestrictedly unless a preceding operation should be performed logically and temporarily prior to a subsequent operation. That is, except such an exceptional case, the essence of the disclosure will not be changed even when an operation described as a subsequent operation is performed prior to an operation described as a preceding operation, and the scope of the disclosure should be defined regardless of the order of operations. As used herein, the expression "A or B" should be defined not only as selectively referring to either A or B but also including both A and B. The term "include" as used herein should be understood as additionally including other components in addition to listed components.

In the present specification, only essential components required to describe the disclosure are described and components that are not related to the essence of the disclosure are not described. In addition, the term "include" should not be interpreted as an exclusive meaning including only components described herein, but should be interpreted as a non-exclusive meaning including other components.

In the following description of the disclosure, related well-known functions or components are briefly described or not described when it is determined that they would obscure the subject matter of the disclosure due to unnecessary detail. Meanwhile, embodiments may be independently implemented or operated but may be implemented or operated in combination.

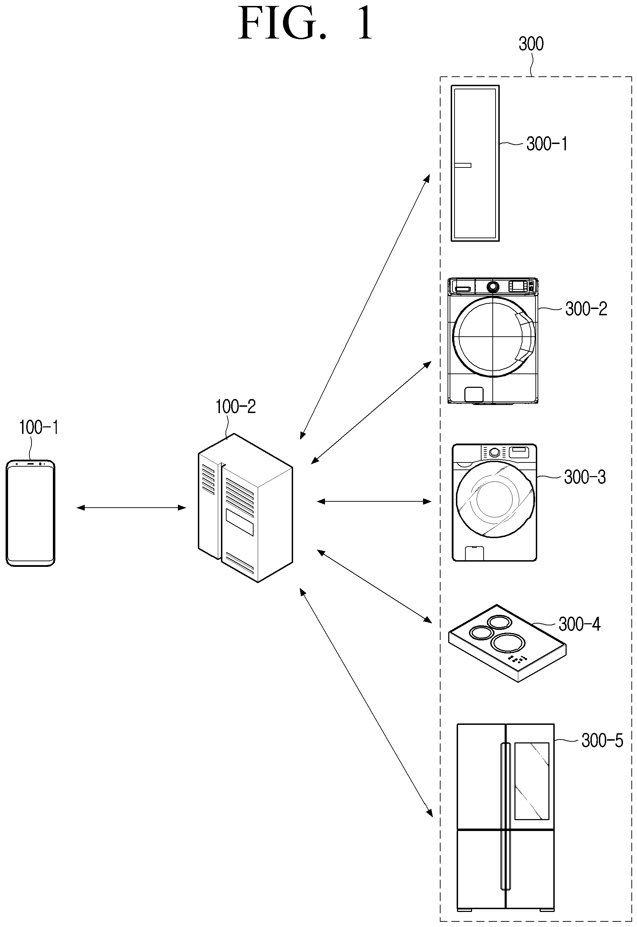

FIG. 1 is a diagram for describing a system according to an embodiment of the disclosure.

Referring to FIG. 1, the system may include a terminal device 100-1, a central electronic device 100-2, and household appliances 300. For example, the terminal device 100-1 may include a smart phone, a tablet PC, a laptop computer, a navigation device, a wearable device, and the like. The central electronic device 100-2 may include a server, a cloud, a hub device, and the like. The server and the cloud may be embodied as separate electronic devices, and the hub device may be understood as one or more electronic devices set as a master device from among the household appliances 300. The household appliances 300 may include an airdresser 300-1, a dryer 300-2, a washing machine 300-3, an electric range 300-4, a refrigerator 300-5, and the like. The above examples are only examples and the disclosure is not limited thereto.

The system may obtain identification information of an object, and obtain setting information of the household appliance 300. In addition, the system may map the setting information of the household appliance 300 to the obtained identification information.

For example, the central electronic device 100-2 may perform a mapping process.

The terminal device 100-1 may obtain the identification information of an object. Examples of the object may include clothes, food, and the like. The identification information may be implemented as an image or text including information about the object. The identification information may include barcode, quick response (QR) code, PDF417, CODE 16K, a data matrix, maxi code, color code, three-dimensional (3D) code, etc. The identification information may further include an image of the object. The identification information may be displayed on a region of the object. The terminal device 100-1 may capture an image of the identification information of the object using a camera, and obtain the identification information from the captured image. The terminal device 100-1 may transmit the obtained identification information to the central electronic device 100-2. For example, the terminal device 100-1 may capture an image of a barcode displayed on (or attached to) clothes and obtain identification information of the clothes from the captured image. Alternatively, the terminal device 100-1 may capture an image of the clothes and identify the clothes from the captured image. Here, the image of the clothes may be the identification information.

The central electronic device 100-2 may receive operation-related information from each of the household appliances 300. For example, the central electronic device 100-2 may receive information such as the type of fabric, a cleaning course, an operation time, etc. from the airdresser 300-1.

A user may select setting information in the household appliance 300. For example, the user may select a standard course in the airdresser 300-1. Alternatively, the user may select various types of setting information for cleaning the object in the airdresser 300-1. That is, the household appliance 300 may identify the setting information selected by the user, and transmit the identified setting information to the central electronic device 100-2. Alternatively, the user may select setting information of the household appliance 300 in the terminal device 100-1. The central electronic device 100-2 may transmit operation-related information obtained from each of the household appliances 300 to the terminal device 100-1. The terminal device 100-1 may obtain the operation-related information of each of the household appliances 300 through the central electronic device 100-2. A user may select setting information in the terminal device 100-1. The terminal device 100-1 may identify the setting information selected by the user and transmit the identified setting information to the central electronic device 100-2.

The central electronic device 100-2 may obtain the identification information of the object from the terminal device 100-1. The central electronic device 100-2 may obtain setting information selected by a user from the terminal device 100-1 or the household appliance 300. The central electronic device 100-2 may map the setting information to the obtained identification information of the object. The central electronic device 100-2 may transmit, to the terminal device 100-1, mapping information in which the identification information and the setting information are mapped to each other.

After the identification information and the setting information are mapped to each other, the central electronic device 100-2 may transmit to the household appliance 300 a control command to perform an operation of the setting information mapped to the identification information, when the identification information is obtained. The terminal device 100-1 may capture an image of the identification information of the object, and obtain the identification information from the captured image. In addition, the terminal device 100-1 may transmit the obtained identification information to the central electronic device 100-2. The central electronic device 100-2 may receive the identification information of the object from the terminal device 100-1 to obtain the identification information. The central electronic device 100-2 may identify the setting information mapped to the obtained identification information. The central electronic device 100-2 may transmit a control command to a household appliance 300 related to the identified setting information. For example, the central electronic device 100-2 may identify that the setting information mapped to the obtained identification information is information for operating the airdresser 300-1 according to a standard course. The central electronic device 100-2 may transmit a command to operate the airdresser 300-1 according to the standard course to the airdresser 300-1. The airdresser 300-1 may perform an operation according to the control command transmitted thereto.

Alternatively, the terminal device 100-1 may identify the setting information mapped to the identification information. As described above, the terminal device 100-1 may obtain the mapping information in which the identification information and the setting information are mapped to each other from the central electronic device 100-2. When the terminal device 100-1 obtains the identification information of the object, the terminal device 100-1 may identify the setting information mapped to the obtained identification information. The terminal device 100-1 may transmit to the household appliance 300 a control command to perform an operation of the identified setting information. For example, the terminal device 100-1 may transmit the control command directly to the household appliance 300 or transmit the control command to the household appliance 300 through the central electronic device 100-2.

Alternatively, for example, the terminal device 100-1 may perform a mapping process.

The terminal device 100-1 may capture an image of identification information of an object using a camera, and obtain the identification information from the captured image. A user may select setting information in the household appliance 300. The household appliance 300 may identify the setting information selected by the user, and transmit the identified setting information to the central electronic device 100-2. The central electronic device 100-2 may transmit the obtained setting information to the terminal device 100-1. The terminal device 100-1 may obtain setting information set by a user from the central electronic device 100-2. The terminal device 100-1 may map the setting information to the obtained identification information of the object.

Alternatively, a user may select setting information in the terminal device 100-1. First, the central electronic device 100-2 may obtain operation-related information from each of the household appliances 300. In addition, the central electronic device 100-2 may transmit the obtained operation-related information to the terminal device 100-1. The terminal device 100-1 may obtain the operation-related information of each of the household appliances 300 through the central electronic device 100-2. When receiving the identification information of the object, the terminal device 100-1 may display the operation-related information of the household appliances 300. The user may select setting information from among the displayed operation-related information. The terminal device 100-1 may map the setting information selected by the user to the obtained identification information.

After the identification information and the setting information are mapped to each other, the terminal device 100-1 may transmit to the household appliance 300 a control command to perform an operation of the setting information mapped to the identification information, when the identification information is obtained. For example, the terminal device 100-1 may transmit the control command directly to the household appliance 300 or transmit the control command to the household appliance 300 through the central electronic device 100-2. The household appliance 300 may perform the operation according to the control command transmitted thereto.

A configuration of an electronic device will be described below.

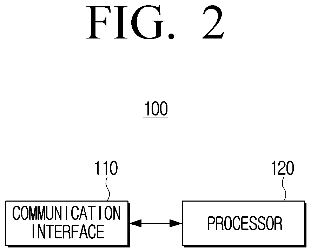

FIG. 2 is a block diagram illustrating a configuration of an electronic device according to one or more embodiments of the disclosure.

Referring to FIG. 2, an electronic device 100 may include a communication interface 110 and a processor 120.

For example, the electronic device 100 may be a central electronic device.

The communication interface 110 may communicate with an external device. For example, the external device may include a terminal device and a household appliance. The communication interface 110 may transmit and receive information to and from a terminal device or a household appliance. For example, the communication interface 110 may receive identification information of an object and setting information of a household appliance selected by a user in the terminal device 100-1 from the terminal device, and transmit operation-related information of the household appliance to the terminal device. In addition, the communication interface 110 may receive operation-related information from a household appliance, and transmit a control command to perform an operation of the setting information to the household appliance. For example, the communication interface 110 may communicate with an external device by least one communication method of Wi-Fi, Wi-Fi direct, Bluetooth, Zigbee, 3rd Generation (3G), 3rd Generation Partnership Project (3GPP), or Long-Term Evolution (LTE). The communication interface 110 may be referred to as a communication device, a communicator, a communication module, a transceiver, or the like.

The electronic device 100 may include one or more processors 120. The processor 120 may control components of the electronic device 100. For example, the processor 120 may control the communication interface 110 to transmit and receive data to and from the external device.

The processor 120 may obtain identification information of an object. For example, the processor 120 may control the communication interface 110 to obtain the identification information of the object from a terminal device. The processor 120 may control the communication interface 110 to receive operation-related information of a household appliance. The processor 120 may map setting information selected from among the obtained identification operation-related information of the household appliance to the obtained information of the object. The processor 120 may set time information for the mapped setting information. For example, the time information may be preset time information or time information input by a user. The time information may be expiration time information. That is, the processor 120 may delete setting information mapped at a point in time corresponding to the set time information.

The selected setting information may include at least one piece of setting information. The processor 120 may map at least one selected setting information to a piece of identification information. The processor 120 may obtain input information related to the object. For example, the input information related to the object may include an image of the object, voice information of a user, and the like. The input information related to the object may be input through a terminal device. The processor 120 may obtain the input information related to the object from the terminal device through the communication interface 110. The processor 120 may map the obtained input information related to the object to the identification information. That is, the processor 120 may map one or more pieces of setting information selected by the user and the input information related to the object to one piece of identification information.

Alternatively, the processor 120 may obtain pieces of identification information from a plurality of obj ects. For example, the processor 120 may obtain identification information of T-shirt, identification information of skirt, identification information of pants, and identification information of one-piece dress. In addition, the processor 120 may obtain selected setting information. The processor 120 may map the selected setting information to the pieces of identification information of the plurality of obj ects. The selected setting information mapped to each of the pieces of identification information of the plurality of objects may be the same information. Accordingly, the same setting information mapped to the pieces of identification information of the plurality of objects may be referred to as common information.

After setting information or the like is mapped to identification information, an operation related to the mapped setting information may be performed when the processor 120 obtains the identification information. For example, the processor 120 may obtain identification information of an object. When the obtained identification information includes the mapped setting information, the processor 120 may control the communication interface 110 to transmit a control command to perform an operation corresponding to the mapped setting information to a household appliance. Alternatively, the processor 120 may obtain pieces of identification information from a plurality of objects. When the processor 120 obtains the pieces of identification information of the plurality of objects, the processor 120 may identify common information mapped to the pieces of obtained identification information of the plurality of objects. When there is common information mapped to the pieces of identification information, the processor 120 may output the identified common information. If there is no common information mapped to the pieces of identification information, the processor 120 may output a message inquiring whether to register common information.

The electronic device 100 may be a terminal device.

When the electronic device 100 is a terminal device, the communication interface 110 may transmit and receive information to and from the central electronic device or a household appliance. For example, the communication interface 110 may receive operation-related information of the household appliance and setting information selected in the household appliance from the central electronic device, and transmit a control command to perform an operation of the setting information to the central electronic device or the household appliance.

The processor 120 may obtain identification information of an object. The processor 120 may map setting information selected from among the obtained operation-related information of the household appliance to the obtained identification information of the object. The processor 120 may set time information for the mapped setting information. The processor 120 may delete setting information mapped at a point in time corresponding to the set time information.

The selected setting information may include at least one piece of setting information. The processor 120 may map at least one selected setting information to a piece of identification information. Alternatively, the processor 120 may obtain input information related to the object, and map the obtained input information related to the object to the identification information. That is, the processor 120 may map one or more pieces of setting information selected by the user and the input information related to the object to one piece of identification information.

Alternatively, the processor 120 may obtain pieces of identification information from a plurality of objects. In addition, the processor 120 may obtain selected setting information. The processor 120 may map the selected setting information to the pieces of identification information of the plurality of obj ects. The selected setting information mapped to each of the pieces of identification information of the plurality of objects may be the same information.

After setting information or the like is mapped to identification information, an operation related to the mapped setting information may be performed when the processor 120 obtains the identification information. For example, the processor 120 may obtain identification information of an object. When the obtained identification information includes the setting information mapped thereto, the processor 120 may control the communication interface 110 to transmit a control command to perform an operation corresponding to the mapped setting information to a household appliance. The control command may be directly transmitted to the household appliance or transmitted to the household appliance through the central electronic device. Alternatively, the processor 120 may obtain pieces of identification information from a plurality of objects. When the processor 120 obtains the pieces of identification information of the plurality of obj ects, the processor 120 may identify common information mapped to the pieces of obtained identification information of the plurality of obj ects. When there is mapped common information, the processor 120 may output the identified common information. If there is no mapped common information, the processor 120 may output a message inquiring whether to register common information.

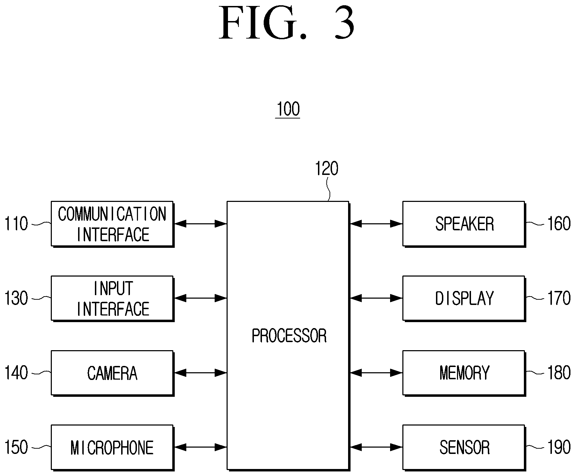

FIG. 3 is a detailed block diagram illustrating a configuration of an electronic device according to an embodiment of the disclosure.

Referring to FIG. 3, the electronic device 100 may include a communication interface 110, a processor 120, an input interface 130, a camera 140, a microphone 150, a speaker 160, a display 170, a memory 180, and a sensor 190. The communication interface 110 may be as described above with reference to FIG. 2.

A control command may be received from a user through the input interface 130. For example, a control command related to a function of the camera 140 or the microphone 150, a selection command related to a household appliance or operation-related information of the household appliance, an input command related to user information, or the like may be input through the input interface 130. For example, the input interface 130 may include a keyboard, a button, a keypad, a touch pad, or a touch screen. The input interface 130 may be referred to as an input device, an inputter, an input module, or the like.

The camera 140 may capture an image of identification information of an object or an image of the object. The processor 120 may identify the object or the identification information of the object from the captured image. Alternatively, the captured image of the object may be input information related to the object. The processor 120 may map the captured image of the object to the identification information. For example, the camera 140 may include an RGB camera, a depth camera, a wide-angle camera, a telephoto camera, or the like.

Sound of a surrounding environment or a user's voice may be input through the microphone 150. The processor 120 may map input sound or voice to the identification information. Alternatively, the processor 120 may identify a control command on the basis of a user's input voice and perform a control operation related to the identified control command. For example, the microphone 150 may include a general microphone, a surround microphone, a directional microphone, or the like.

The speaker 160 may output a sound signal. For example, when identification information is obtained while sound (or voice) is mapped to the identification information, the speaker 160 may output the mapped sound under control of the processor 120. In addition, the speaker 160 may output information about a command input by a user, warning-related information, operation-related information, notification information, or the like in the form of voice or notification sound.

The display 170 may output data processed by the processor 120 in the form of an image. The display 170 may display a user interface (UI) for mapping setting information or the like to identification information. In addition, the display 170 may display the setting information and the like mapped to the identification information. When pieces of information are mapped to the identification information, the display 170 may display the pieces of mapped information. For example, the pieces of information displayed on the display 170 may include an image of an object. When the displayed image of the object is selected, the processor 120 may transmit to a household appliance a command to perform an operation corresponding to the setting information mapped to the displayed image. Alternatively, the display 170 may display notification information or the like. For example, the display 170 may be embodied as a liquid crystal display (LCD), an organic light-emitting diode (OLED), a flexible display, a touch screen, or the like. When the display 170 is embodied as a touch screen, the electronic device 100 may receive a control command through the touch screen.

The memory 180 may store data, an algorithm, and the like for performing functions of the electronic device 100, and a program, commands, and the like to be executed by the electronic device 100. Alternatively, the memory 180 may store information about a household appliance, operation-related information of the household appliance, identification information, setting information mapped to the identification information, etc. The algorithm or data stored in the memory 180 may be loaded to the processor 120 to map the identification information and the setting information to each other and perform a function related to the mapped setting information, under control of the processor 120. For example, the memory 180 may be implemented as a type of memory such as a read-only memory (ROM), a random access memory (RAM), a hard disc drive (HDD), a solid-state driver (SSD), or a memory card.

The sensor 190 may detect a surrounding environment of the electronic device 100. Examples of the sensor 190 may include an angle sensor, an acceleration sensor, a gravity sensor, a gyro sensor, a geomagnetic sensor, a direction sensor, an infrared sensor, an ultrasonic sensor, a time-of-flight (ToF) sensor, a light wave detection and ranging (LiDAR) sensor, a laser sensor, a motion recognition sensor, a heat sensor, an image sensor, a tracking sensor, a proximity sensor, an illuminance sensor, a voltmeter, a current meter, a barometer, a hygrometer, a thermometer, a touch sensor, and the like.

The electronic device 100 may include all or some of the components described above. The configuration of the electronic device 100 has been described above. A process of mapping identification information and setting information to each other and a process of operating a household appliance on the basis of the mapped setting information, which are performed by the electronic device 100, will be described below. As described above, the electronic device 100 may be a terminal device or a central electronic device. An example in which the electronic device 100 is a terminal device will be mainly described below.

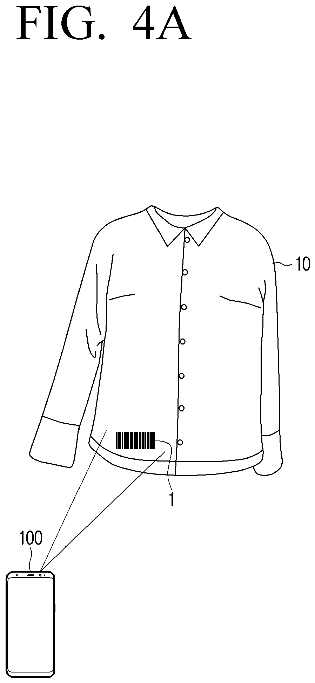

FIGS. 4A to 4C are diagrams for describing a process of mapping identification information and setting information to each other according to one or more embodiments of the disclosure.

FIG. 4A illustrates an electronic device 100 for capturing identification information 1 displayed on an object. The object may be clothes, food or the like. The identification information 1 may include a barcode, a quick response (QR) code, PDF417, CODE 16K, a data matrix, maxi code, color code, three-dimensional (3D) code or the like, and be displayed on a region of the object.

The electronic device 100 may capture the identification information 1 using a camera. Alternatively, the electronic device 100 may include a scanner and scan the identification information 1 using the scanner. The electronic device 100 may obtain the identification information 1 using the camera or the scanner. When the identification information 1 is obtained, the electronic device 100 may receive information to be mapped to the identification information 1. The information to be mapped to the identification information 1 may be obtained from the household appliance 300 or the electronic device 100.

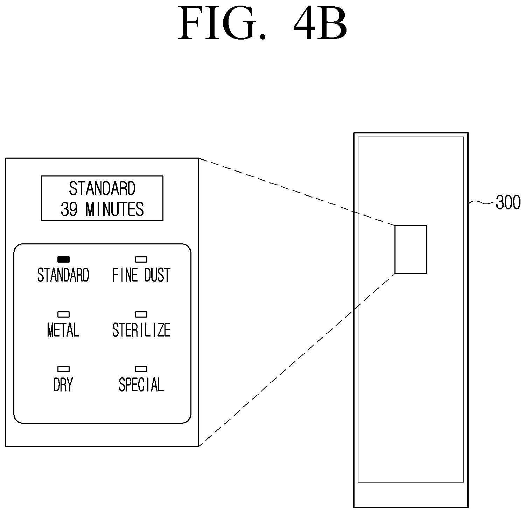

FIG. 4B illustrates an embodiment in which the information to be mapped to the identification information 1 is obtained from the household appliance 300. A user may capture identification information 1 of clothes 10, which is an object, and set (or select) operation-related information of the household appliance 300 in the household appliance 300. For example, when the household appliance 300 is an airdresser, the user may select an item for cleaning the clothes 10. A user may set a cleaning course (e.g., a standard course), an operation time, etc. The household appliance 300 may transmit operation information set by a user to the electronic device 100. The household appliance 300 may directly transmit the setting information to the electronic device 100 or transmit the setting information to the electronic device 100 through a central electronic device. When obtaining the setting information, the electronic device 100 may map the setting information to the identification information from the household appliance 300.

Alternatively, the setting information may be input from the electronic device 100.

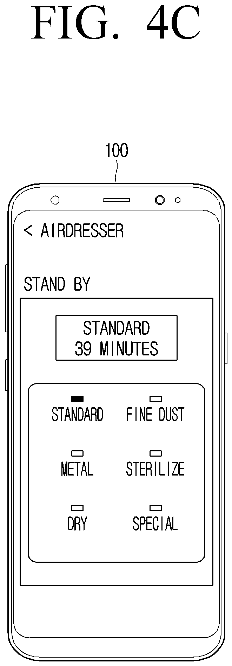

FIG. 4C illustrates an electronic device 100 displaying operation-related information of the household appliance 300. A central electronic device may receive operation-related information from each household appliance 300. For example, the central electronic device may receive information such as a cleaning course and an operation time from an airdresser. The central electronic device may transmit the received operation-related information of each household appliance 300 to the electronic device 100. When the electronic device 100 obtains the identification information 1 of the clothes 10, the electronic device 100 may display a UI for setting an operation of the household appliance 300.

For example, the electronic device 100 may display a list of household appliances 300, and display the operation-related information of a household appliance 300 when the household appliances 300 is selected from the list. For example, the electronic device 100 may display a list of a refrigerator, an electric range, a microwave, a washing machine, a dryer, an airdresser, etc., and display a UI for setting a cleaning course, an operation time, etc. when the airdresser is selected.

Alternatively, the electronic device 100 may display a list of household appliances 300 related to an object corresponding to obtained identification information, and display operation-related information of a household appliance 300 when the household appliance 300 is selected from the list. For example, when the object corresponding to the obtained identification information is the clothes 10, the electronic device 100 may display a list of a washing machine, a dryer, and an airdresser related to the clothes 10 and display a UI for setting a cleaning course, an operation time, etc. when the airdresser is selected. The electronic device 100 may map operation information selected (or set) by a user from among the displayed operation-related information of the household appliance 300 to the obtained identification information.

For example, the electronic device 100 may be a central electronic device. The object may be the clothes 10, and the household appliance 300 may be an airdresser.

When the electronic device 100 is a central electronic device, the identification information 1 of the clothes 10 may be obtained from a terminal device. When a user selects a standard cleaning course to be performed for 39 minutes on the airdresser, the airdresser may transmit setting information selected by the user to the electronic device 100. The electronic device 100 may map the selected setting information obtained from the airdresser to the identification information 1 of the clothes 10.

Alternatively, the electronic device 100 may receive operation-related information from various types of household appliances 300, including the airdresser, and transmit the received operation-related information to a terminal device. When obtaining the identification information 1 of the clothes 10, the terminal device may display a UI for setting an operation of the household appliance 300 on the basis of the received operation-related information of the household appliance 300. When a user selects the airdresser to operate according to the standard cleaning course for 39 minutes through the terminal device, the terminal device may transmit setting information of the airdresser selected by the user to the electronic device 100. The electronic device 100 may obtain the setting information selected by the user, and map the setting information to the identification information 1 of the clothes 10.

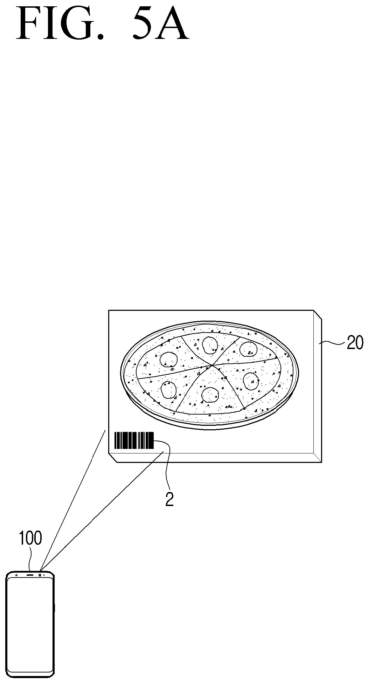

FIGS. 5A to 5C are diagrams illustrating a process of obtaining identification information and operating a household appliance according to one or more embodiments of the disclosure.

FIG. 5A illustrates an electronic device 100 for capturing identification information 2 displayed on frozen pizza 20, which is an object. As described above with reference to FIGS. 4A to 4C, the electronic device 100 may map a 3-minute defrosting course, which is to be performed by a microwave, to the identification information 2 of the frozen pizza 20. After the identification information 2 and setting information of the microwave are mapped to each other, the electronic device 100 may obtain the identification information 2 of the frozen pizza 20, which is an object, as illustrated in FIG. 5A. As described above, the electronic device 100 may capture the identification information 2 using a camera, and scan the identification information 2 using a scanner.

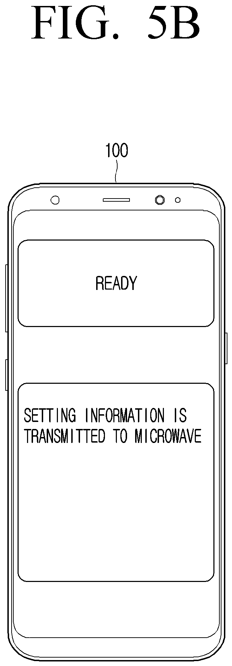

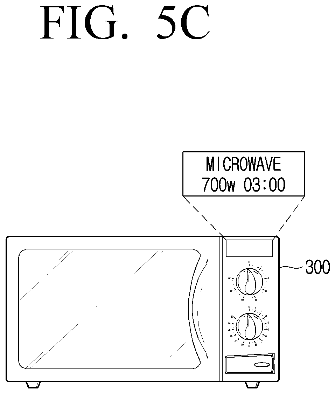

FIGS. 5B and 5C illustrate one or more embodiments in which an operation corresponding to mapped setting information is performed. One or more pieces of information may be mapped to the identification information 2. An example in which a piece of information is mapped to the identification information 2 will be described with reference to FIGS. 5B and 5C, and one or more embodiments in which pieces of information are mapped to identification information will be described below.

When the identification information 2 is obtained, the electronic device 100 may identify setting information mapped thereto. In addition, the electronic device 100 may transmit a command to perform an operation corresponding to the mapped setting information to a household appliance 300. For example, when the identification information 2 of the frozen pizza 20 is obtained, the electronic device 100 may transmit to the microwave a control command to perform the 3-minute defrosting course mapped to the identification information 2 of the frozen pizza 20. The electronic device 100 may transmit the control command to the microwave, and display a status notification message as shown in FIG. 5B. The microwave may receive the control command from a terminal device and perform an operation of the 3-minute defrosting course as shown in FIG. 5C.

For example, the electronic device 100 may be a central electronic device. The object may be the frozen pizza 20, and the household appliance 300 may be a microwave.

When the electronic device 100 is a central electronic device, the identification information 2 of the frozen pizza 20 may be obtained from the terminal device. The electronic device 100 may identify setting information of the 3-minute defrosting course of the microwave mapped to the identification information 2 of the frozen pizza 20. The electronic device 100 may transmit a control command to perform the 3-minute defrosting course to the microwave. In addition, the electronic device 100 may transmit state notification information to the terminal device. The terminal device may display a status notification message, and the microwave may perform the operation of the 3-minute defrosting course.

The example in which a piece of information is mapped to a piece of identification information has been described above. An example in which a piece of information is mapped to pieces of identification information or pieces of information are mapped to a piece of identification information will be described.

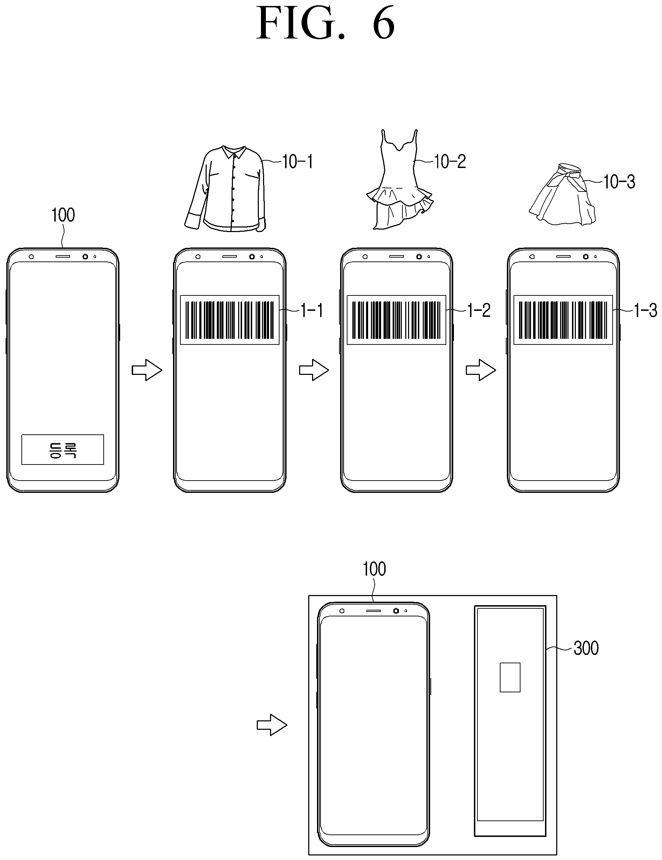

FIG. 6 is a diagram illustrating a process of mapping identification information and setting information of a plurality of objects to each other according to one or more embodiments of the disclosure.

Referring to FIG. 6, an electronic device 100 may obtain identification information of a plurality of objects. For example, the electronic device 100 may capture (or scan) identification information 1-1 of shirt 10-1, capture identification information 1-2 of one-piece dress 10-2, and capture identification information 1-3 of skirt 10-3. After the identification information 1-1 of the shirt 10-1, the identification information 1-2 of the one-piece dress 10-2, and the identification information 1-3 of the skirt 10-3 are obtained, the electronic device 100 may receive information to be mapped to each of the identification information 1-1, 1-2, and 1-3. The information to be mapped may be obtained from a household appliance 300 by the electronic device 100.

For example, the household appliance 300 may be an airdresser, and a user may select an item for cleaning the shirt 10-1, the one-piece dress 10-2, and the skirt 10-3 in the airdresser. The user may set a standard course, an operation time, and the like. The airdresser may transmit operation information set by a user to the electronic device 100. When setting information is obtained from the airdresser, the electronic device 100 may map information, e.g., the standard course and the operation time, which is set in the airdresser to the identification information 1-1 of the shirt 10-1, the identification information 1-2 of the one-piece dress 10-2, and the identification information 1-3 of the skirt 10-3.

Alternatively, a user may input the setting information through the electronic device 100. The electronic device 100 may obtain operation-related information of a household appliance 300 through a central electronic device. When the electronic device 100 obtains the identification information 1-1 of the shirt 10-1, the identification information 1-2 of the one-piece dress 10-2, and the identification information 1-3 of the skirt 10-3, the electronic device 100 may display a UI for setting an operation of the household appliance 300. The electronic device 100 may be provided with information, i.e., a standard course, an operation time, etc., of the airdresser selected through the displayed UI. The electronic device 100 may map the information, such as the standard course and the operation time, of the airdresser selected by the user from among the displayed operation-related information of the household appliance 300 to the identification information 1-1 of the shirt 10-1, the identification information 1-2 of the one-piece dress 10-2, and the identification information 1-3 of the skirt 10-3. The information mapped to each of the identification information 1-1 of the shirt 10-1, the identification information 1-2 of the one-piece dress 10-2, and the identification information 1-3 of the skirt 10-3 may be the information, such as the standard course and the operation time, of the same airdresser. The same information mapped to pieces of identification information of a plurality of objects may be referred to as common information.

The electronic device 100 may be a central electronic device. When the electronic device 100 is a central electronic device, the identification information 1-1 of the shirt 10-1, the identification information 1-2 of the one-piece dress 10-2, and the identification information 1-3 of the skirt 10-3 may be obtained from a terminal device. In addition, the electronic device 100 may obtain information, such as a standard course and an operation time, of the airdresser set by a user from the airdresser or the terminal device. The electronic device 100 may map the obtained information, such as the standard course and the operation time, of the airdresser to the identification information 1-1 of the shirt 10-1, the identification information 1-2 of the one-piece dress 10-2, and the identification information 1-3 of the skirt 10-3.

An example in which information mapped to identification information is setting information related to an operation of the household appliance 300 has been described above. The information mapped to the identification information may be input information (e.g., custom information) input by a user.

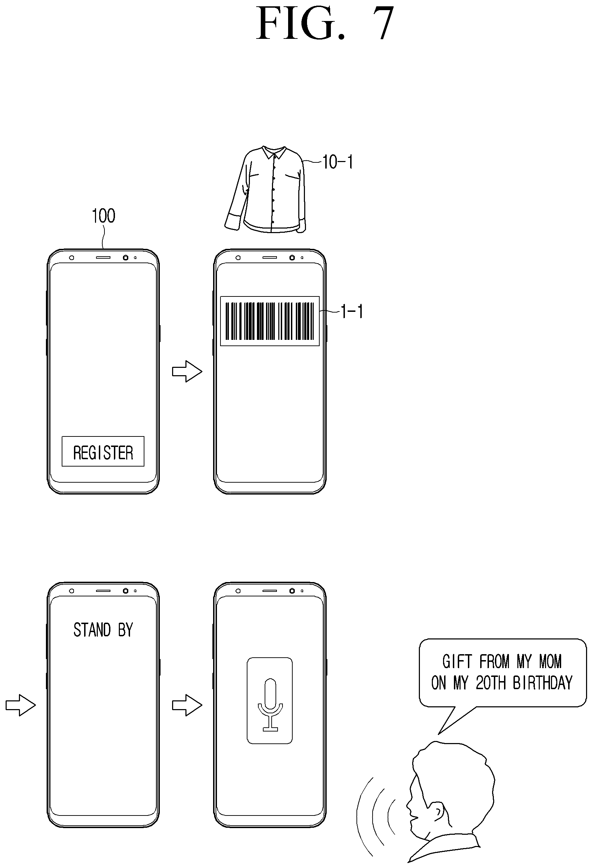

FIG. 7 is a diagram illustrating a process of mapping voice information to identification information according to one or more embodiments of the disclosure.

Referring to FIG. 7, the electronic device 100 may obtain identification information 1-1 of an object. After the identification information 1-1 is obtained, a user may input personal input information instead of setting information of a household appliance 300. For example, the input information may include information such as text, an image, or sound including voice.

For example, the electronic device 100 may obtain the identification information 1-1 of shirt 10-1. The electronic device 100 may execute a voice input function according to a user's selection and receive voice input from the user. For example, a vocalized statement "A gift from my mother on my 20th birthday" may be input to the electronic device 100 from a user. When the input of the vocalized statement is finished, the electronic device 100 may map information of the input voice to the identification information 1-1 of the shirt 10-1.

Alternatively, the electronic device 100 may be a central electronic device. In this case, the electronic device 100 may obtain the identification information 1-1 of the shirt 10-1 from the terminal device, and obtain the information of the input voice. The electronic device 100 may map the obtained information of the voice to the identification information 1-1.

When the electronic device 100 maps various types of information to identification information of an object and obtains the identification information of the object, the electronic device 100 may perform an operation corresponding to the mapped information. The identification information of the object may include one or more pieces of identification information, and one or more pieces of information may be provided thereto.

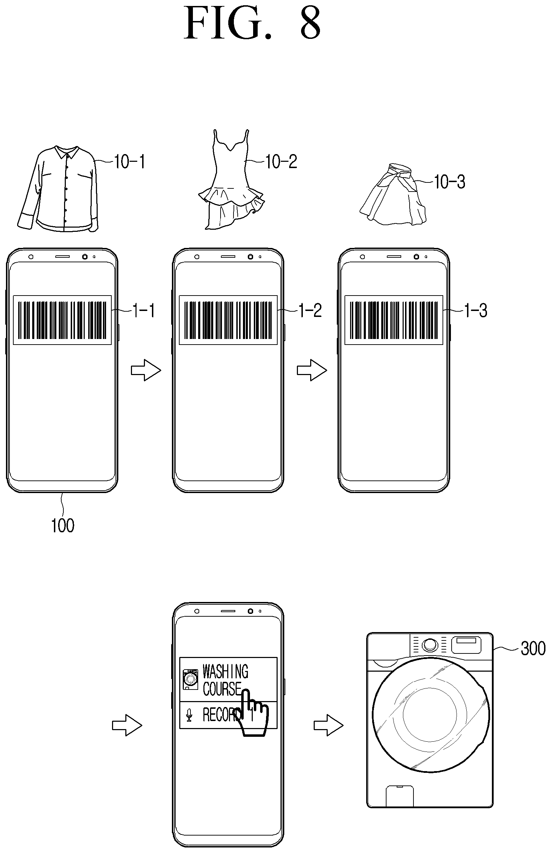

FIG. 8 is a diagram illustrating a process of operating a household appliance using setting information according to one or more embodiments of the disclosure.

Referring to FIG. 8, an electronic device 100 may obtain identification information of an object in a state in which setting information is mapped to the identification information of the object. For example, the electronic device 100 may obtain identification information 1-1 of shirt 10-1, identification information 1-2 of one-piece dress 10-2, and identification information 1-3 of skirt 10-3. As described above with reference to FIG. 6, the electronic device 100 may map the same setting information to the identification information 1-1 of the shirt 10-1, the identification information 1-2 of the one-piece dress 10-2, and the identification information 1-3 of the skirt 10-3. Therefore, after the same setting information is mapped to the identification information 1-1, 1-2, and 1-3, the electronic device 100 may output the same information mapped to the identification information 1-1, 1-2, and 1-3, when the identification information 1-1 of the shirt 10-1, the identification information 1-3 of the dress 10-2, and the identification information 1-3 of the skirt 10-3 are obtained. When pieces of same information are mapped to the identification information 1-1, 1-2, and 1-3, the electronic device 100 may output the pieces of same information. For example, as shown in FIG. 8, the electronic device 100 may display the same information mapped to the identification information 1-1, 1-2, and 1-3 in the form of a list. The electronic device 10 may sort out and display pieces of information according to registration time, usage history (e.g., frequency of use, recent usage history, etc.), and items (e.g., the types of household appliances, the type of input information, etc.).

A piece of information may be selected by a user from among the pieces of displayed information. For example, when a recording 4 is selected, the electronic device 100 may output sound information of the recording 4. When a washing course is selected, the electronic device 100 may transmit a control command related to an operation corresponding to the selected washing course to the household appliance 300, i.e., a washing machine. Upon receiving the control command, the washing machine may perform a washing operation according to information about the washing course.

For example, the electronic device 100 may be a central electronic device. In this case, the electronic device 100 may obtain identification information, setting information, and the like from a terminal device or a household appliance, and map the setting information to the identification information. Thereafter, when the terminal device obtains the identification information 1-1 of the shirt 10-1, the identification information 1-2 of the one-piece dress 10-2, and the identification information 1-3 of the skirt 10-3, the electronic device 100 may obtain the identification information 1-1, 1-2, and 1-3 from the terminal device. The electronic device 100 may identify the same information mapped to the identification information 1-1, 1-2, and 1-3 on the basis of the mapped information. When pieces of same information are mapped to the identification information, the electronic device 100 may output the pieces of same information. For example, the electronic device 100 may transmit the pieces of information to the terminal device.

The terminal device may sort out and display the pieces of information according to a certain criterion, and transmit a piece of information selected from among the pieces of information to the electronic device 100. The electronic device 100 may transmit the selected information to the terminal device or the household appliance. For example, when the recording 4 is selected, the electronic device 100 may transmit the sound information of the recording 4 to the terminal device. When a washing course is selected, the electronic device 100 may transmit a control command related to an operation corresponding to the selected washing course to a washing machine. In addition, the electronic device 100 may transmit state-related information to the terminal device. The terminal device may display the state-related information.

The example in which pieces of identification information are obtained simultaneously or sequentially and the same setting information mapped thereto is common information has been described above. However, the common information may be individually mapped to the pieces of identification information.

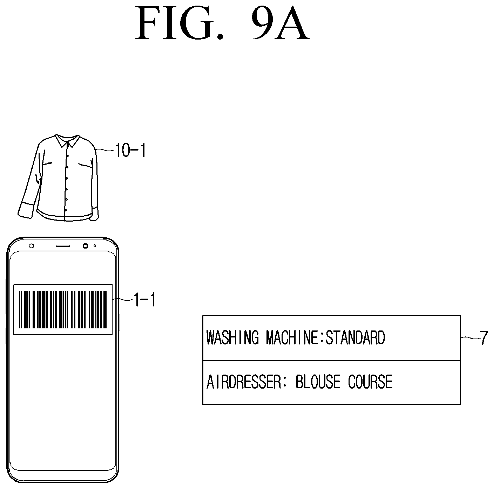

FIGS. 9A to 9C are diagrams illustrating common information according to one or more embodiments of the disclosure.

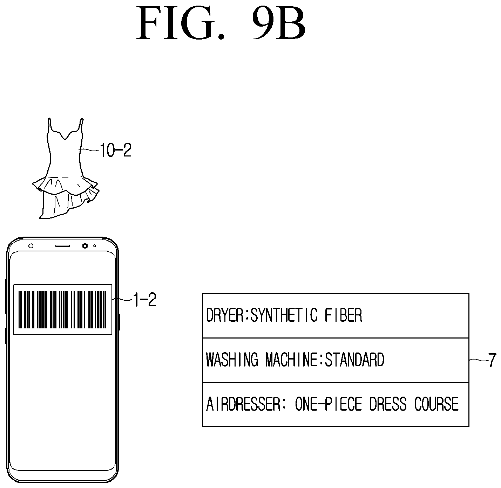

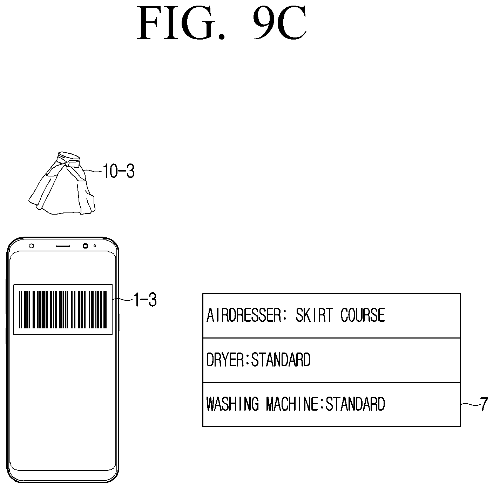

FIG. 9A illustrates setting information mapped to identification information 1-1 of shirt 10-1. FIG. 9B illustrates setting information mapped to identification information 1-2 of one-piece dress 10-2. FIG. 9C illustrates setting information mapped to identification information 1-3 of skirt 10-3. FIGS. 9A to 9C will be described together below.

For example, "washing machine: standard"(7) and "airdresser:blouse course" may be mapped as setting information to the identification information 1-1 of the shirt 10-1. "dryer:synthetic fiber", "washing machine:standard"(7), and "airdresser:one-piece dress course" may be mapped as setting information to the identification information 1-2 of the one-piece dress 10-2. "airdresser:skirt course," "dryer: standard," and "washing machine: standard"(7) may be mapped as setting information to the identification information 1-3 of the skirt 10-3. The setting information mapped to the identification information 1-1 of the object 10-1, the setting information mapped to the identification information 1-2 of the object 10-2, and the setting information mapped to the identification information 1-3 of the object 10-3 may be information registered at different times. Alternatively, the mapped setting information may be information registered at the same time.

In this case, as described above with reference to FIG. 8, the electronic device 100 may obtain the identification information 1-1 of the shirt 10-1, the identification information 1-2 of the one-piece dress 10-2, and the identification information 1-3 of the skirt 10-3 simultaneously or sequentially. The electronic device 100 may identify the setting information mapped to each of the identification information 1-1, 1-2, and 1-3. The electronic device 100 may identify that the setting information of "washing machine:standard"(7) among the mapped setting information is the same information mapped to the identification information 1-1, 1-2, and 1-3. The electronic device 100 may output the setting information of "washing machine:standard"(7) that is the same information mapped to the identification information 1-1, 1-2, and 1-3. For example, the electronic device 100 may display the setting information of "washing machine:standard"(7), and transmit a control command to operate the washing machine according to a standard washing course to the washing machine.

When there are pieces of same information, the electronic device 100 may sort out and output the pieces of same information according to a certain criterion as described above with reference to FIG. 8. When one of the pieces of information is selected, the electronic device 100 may perform an operation related to the selected information.

For example, the electronic device 100 may be a central electronic device. In this case, the electronic device 100 may obtain the identification information 1-1, 1-2, and 1-3 of a plurality of objects from the terminal device, and identify the same information mapped to the identification information 1-1, 1-2, and 1-3. In addition, the electronic device 100 may output the identified same information. For example, the electronic device 100 may transmit the same identified information to the terminal device, and the terminal device may display the received same information.

Although an example in which identification information of an object is obtained again and an operation corresponding to setting information is performed has been described above, the electronic device 100 may perform an operation corresponding to the setting information on the basis of an image.

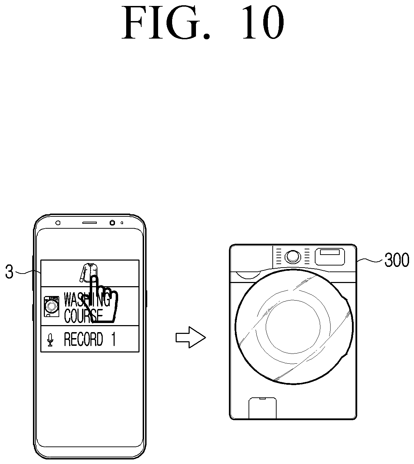

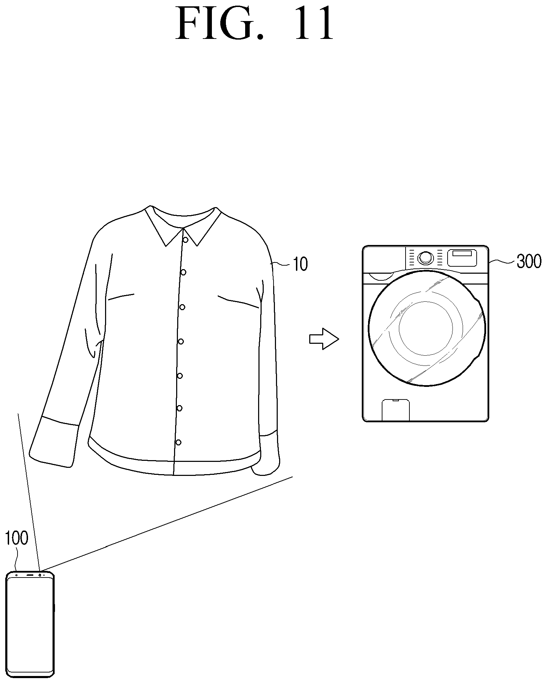

FIG. 10 is a diagram illustrating a process of operating a household appliance using a captured image according to one or more embodiments of the disclosure. FIG. 11 is a diagram illustrating a process of operating a household appliance by photographing an object according to one or more embodiments of the disclosure. FIGS. 10 and 11 will be described together below.

As described above, information input by a user may be mapped to identification information. The information input by the user may include information such as text, an image, and sound including voice. An electronic device 100 may obtain the identification information during mapping of the identification information and setting information. In addition, the electronic device 100 may obtain an image obtained by photographing an object. The electronic device 100 may obtain setting information related to an operation of a household appliance 300. The electronic device 100 may map the image of the object and the setting information related to the operation of the household appliance 300 to the identification information. For example, when obtaining setting information and an image, the electronic device 100 may output a message inquiring whether both the image and the setting information are to be mapped to identification information. When a user allows both the image and the setting information to be mapped to the identification information, the electronic device 100 may map the image and the setting information to the identification information. When the user rejects the mapping of both the image and the setting information to the identification information, the electronic device 100 may map the image as first information to the identification information and map the setting information as second information to the identification information.

After information is mapped to the identification information, when the electronic device 100 obtains identification information of an object, the electronic device 100 may output one or more pieces of information mapped to the obtained identification information. As shown in FIG. 10, when an image is included in information mapped to identification information, the electronic device 100 may output the image as an image item 3. When a user selects the image item 3, the electronic device 100 may perform an operation related (mapped) to the selected image item 3.

When only the image is mapped to the identification information, the electronic device 100 may enlarge and output the selected image. When both an image and setting information of a household appliance 300 are mapped to identification information, the electronic device 100 may transmit to the household appliance 300 a command to perform an operation corresponding to the mapped setting information.

For example, the electronic device 100 may obtain identification information of clothes, and obtain an image of the clothes and washing setting information of a washing machine. The electronic device 100 may map both the image of clothes and the washing setting information to the identification information according to a user's selection. After the mapping the information, when the electronic device 100 obtains the identification information of the clothes, the electronic device 100 may display an image item 3 of the clothes. When the image item 3 of the clothes is selected, the electronic device 100 may transmit to a washing machine a command to perform an operation corresponding to washing machine setting information.

When both the image of the object and the setting information of the household appliance 300 are mapped to the identification information during the mapping, the electronic device 100 may photograph the object and operate the household appliance 300.

For example, as illustrated in FIG. 11, the electronic device 100 may obtain an image of the clothes 10 by photographing the clothes 10. The electronic device 100 may search for mapped clothes image information matching the obtained image of the clothes 10. When there is no mapped clothes image information matching the obtained image of the clothes 10, the electronic device 100 may perform a general camera function. When there is clothes image information matching the obtained image of the clothes 10, the electronic device 100 may identify washing setting information of a washing machine mapped together with the image of the clothes 10. When the washing setting information of the washing machine is identified, the electronic device 100 may transmit a command to perform an operation related to the identified washing setting information to the washing machine.

As described above, for example, the electronic device 100 may be a central electronic device, and the central electronic device may obtain identification information, an image, setting information, etc. from a terminal device or a household appliance and perform a process similar to the above process.

An example in which setting information of a household appliance and/or information input by a user is mapped to identification information of an object, and a corresponding operation is performed by identifying the identification information has been described above. An example in which the electronic device 100 estimates components of an object using a neural network model will be described below.

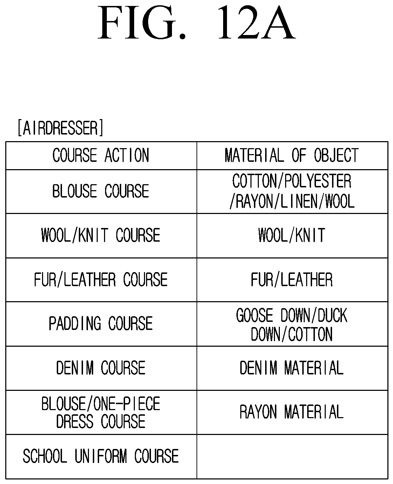

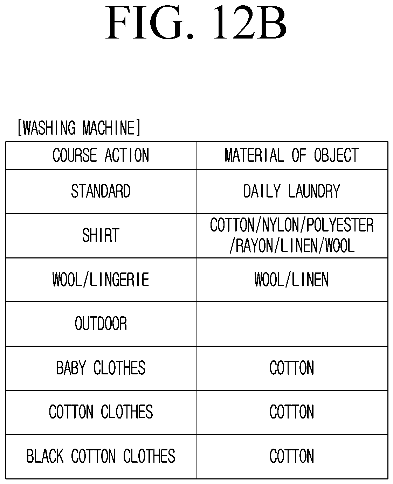

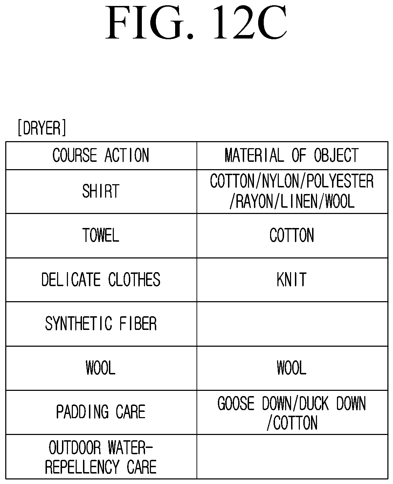

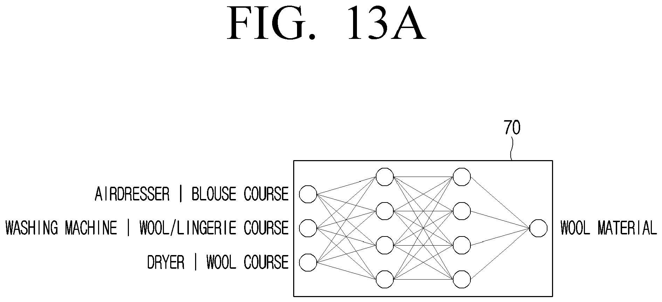

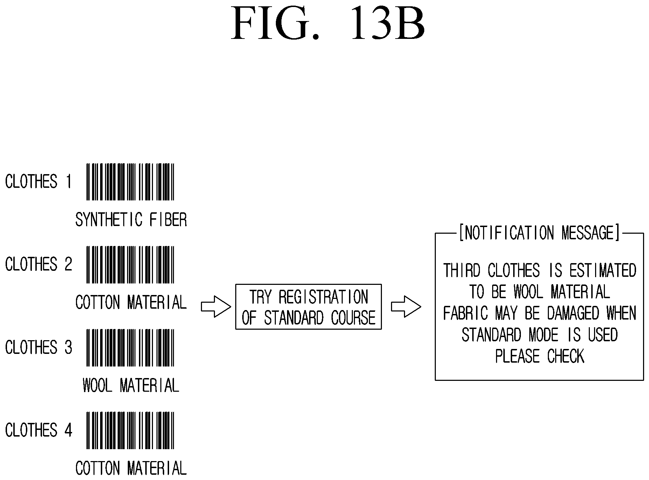

FIGS. 12A to 12C are diagrams illustrating operation-related information of a household appliance according to one or more embodiments of the disclosure. FIGS. 13A and 13B are diagrams illustrating a process of estimating components of clothes and providing a notification to a user according to one or more embodiments of the disclosure. FIGS. 12A to 13B will be described together below.

As illustrated in FIGS. 12A to 12C, household appliances may each include operation-related information. Household appliances related to clothes may include an airdresser, a washing machine, a dryer, etc. The airdresser may include a blouse course, a wool/knit course, etc. as cleaning courses, the washing machine may include a standard course, a shirt course, etc. as washing courses, and the dryer may include a shirt course, a towel course, etc. as drying courses. The household appliances related to clothes may include various types of operation information to perform an optimal operation without causing damage to clothes according to the components (or materials or fabric) of the clothes.

Therefore, operation information of a household appliance related to clothes may include information about components of the clothes. The electronic device 100 may train a neural network model (or an artificial intelligence model) 70 that identifies information about components of an object on the basis of operation information mapped to identification information. Alternatively, sufficient information about components of the object may not be included in the operation information of the household appliance. The electronic device 100 may collect information about components of various types of objects related to operation information mapped to identification information, and train the neural network model 70 on the basis of the operation information and the collected information about the components of the objects.

For example, as shown in FIGS. 12A to 12C, when information about components of clothes is included in operation information of each household appliance, the electronic device 100 may train the neural network model 70 that identifies information about components of clothes on the basis of operation information. When information about materials of an object (components of clothes) is not included in operation information of each household appliance, the electronic device 100 may collect information about components of clothes related to operation information of each household appliance from a manufacturer homepage of each household appliance, a website related to each household appliance, and the like, and train the neural network model 70 that identifies information about components of clothes (object) on the basis of the operation information and the collected information about the components of the clothes. The electronic device 100 may identify information regarding components of an object using the neural network model 70 trained on the basis of identification information of the object.

For example, as shown in FIG. 13A, first information, second information, and third information mapped to identification information of clothes A may be airdresser:blouse course, washing machine:wool/lingerie course, and dryer:wool course, respectively. The electronic device 100 may estimate that a component of the clothes A may be cotton, polyester, rayon, linen, or wool by using the neural network model 70 trained based on the first information mapped to the identification information of the clothes A. The electronic device 100 may estimate that the component of the clothes A may be wool by using the neural network model 70 trained based on the mapped second information. The electronic device 100 may estimate that the component of the clothes A may be wool by using the neural network model 70 trained based on the mapped third information. Therefore, the electronic device 100 may identify that the component of the clothes A is wool by using the trained neural network model 70. The above process has been described by dividing it into several parts for convenience of description and thus the parts thereof may be performed simultaneously (or in parallel or in combination) by the trained neural network model 70.

As described above, the electronic device 100 may obtain pieces of identification information of a plurality of objects simultaneously or sequentially, and map setting information of household appliances as common information to the pieces of obtained identification information. **In** this case, the electronic device 100 may analyze a component of each object by using the trained neural network model 70, and output a notification message to a user when there is a problem with setting information to be mapped to the analyzed component of each object.

For example, as shown in FIG. 13B, the electronic device 100 may obtain identification information of first clothes (CLOTHES 1), identification information of second clothes (CLOTHES 2), identification information of third clothes (CLOTHES 3), and identification information of fourth clothes (CLOTHES 4), and map standard course information of a washing machine as common information to the obtained identification information. The electronic device 100 may identify a component of each of the first to fourth clothes by using the trained neural network model 70 when the identification information of each of the first to fourth clothe is obtained. For example, the electronic device 100 may identify the component of the first clothes as a synthetic fiber, the component of the second clothes as cotton, the component of the third clothes as wool, and the component of the fourth clothes as cotton. In addition, the electronic device 100 may store information indicating that clothes made of wool may be damaged when washed according to a standard course of a washing machine.

That is, when a user maps standard course information of the washing machine as common information to the identification information of the first to fourth clothes, the electronic device 100 may identify that the component of the third clothes is a wool component and cannot be washed according to the standard course of the washing machine. When it is determined based on an identified component of clothes that washing setting information to be mapped is inappropriate, the electronic device 100 may output a notification message as shown in FIG. 13B. That is, when identification information is obtained from each of a plurality of objects, the electronic device 100 may identify component information of each of the plurality of objects. In addition, the electronic device 100 may output a notification message based on the identified component information of each of the plurality of objects and setting information to be mapped.

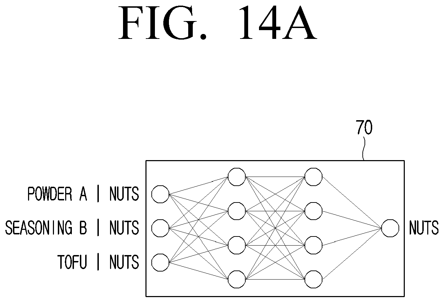

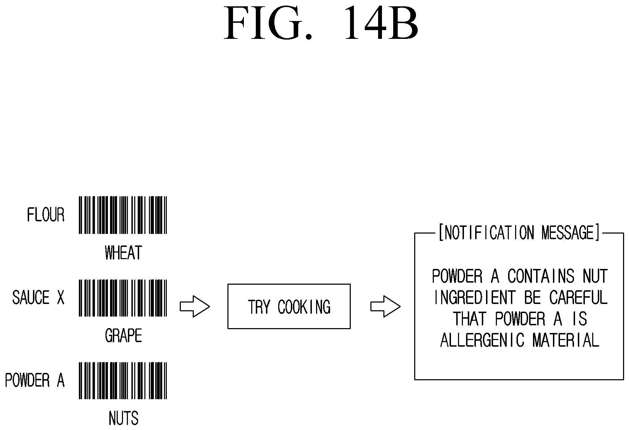

FIGS. 14A and 14B are diagrams illustrating a process of estimating ingredients of food and providing a notification to a user according to one or more embodiments of the disclosure.

The user may make food using a household appliance on the basis of various types of ingredients and recipes. For example, a user may make bread by performing a baking process in an oven for 5 minutes at 170 °C on the basis of ingredients, such as flour, yeast and red bean, and a bread recipe.

Some users are allergic to specific components. For example, when a user is allergic to nuts, the user should not eat food including nuts but it is not easy to check all food ingredients. The electronic device 100 of the disclosure may output a notification message to a user by using the trained neural network model 70 that identifies components of an object.

As shown in FIG. 14A, the electronic device 100 may train the neural network model 70 that identifies component information of an object, based on operation information mapped to identification information. For example, the electronic device 100 may map setting information, e.g., 170 °C, five minutes, and baking, of an oven to identification information of food ingredients such as flour, yeast, and red bean. In addition, the electronic device 100 may train the neural network model 70 that identifies component information, based on the identification information of the food ingredients or the like. As described above, when sufficient component information about an object is not included in operation information of a household appliance, the electronic device 100 may collect component information of various types of objects related to the operation information mapped to identification information, and train the neural network model 70 on the basis of the operation information and the collected component information of the object.

The electronic device 100 may identify components of the object by using the trained neural network model 70. For example, as shown in FIG. 14B, the electronic device 100 may obtain identification information of flour, identification information of a sauce X, and identification information of powder A. The electronic device 100 may identify the component of the flour as wheat, the component of the sauce X as grape, and the component of the powder A as nuts by using a neural network model trained based on the identification information. The electronic device 100 may store information indicating that nuts are allergenic ingredients.

That is, when a user maps cooking course information of a cooking household appliance as common information to the identification information of the flour, the sauce X, and the powder A, the electronic device 100 may output a notification message "Powder A contains nuts that are allergenic ingredients".

A function related to artificial intelligence according to the disclosure may be performed through the processor 120 and the memory 180 of the electronic device 100.

The processor 120 may include one or more processors. In this case, the one or more processors may include, but is not limited to, at least one of a central processing unit (CPU), a graphic processing unit (GPU), or a neural processing unit (NPU).

A CPU is a general-purpose processor capable of performing artificial intelligence operations as well as general operations, and may efficiently execute complex programs through a multi-layer cache structure. The CPU is advantageous for a serial processing method in which a previous calculation result and a subsequent calculation result may be organically connected to each other through sequential calculations. The general-purpose processor is not limited to the above-described examples unless it is specified as the CPU described above.

The GPU is a processor configured to perform a large amount of calculation, such as floating point operations for graphic processing, in which cores are integrated at a large scale to perform large-scale calculations in parallel. In particular, the GPU may be more advantageous than the CPU in terms of a parallel processing method such as a convolution operation. Alternatively, the GPU may be used as an auxiliary processor to supplement functions of the CPU. The processor configured to perform a large amount of calculation is not limited to the above-described examples unless it is specified as the GPU described above.

The NPU is a processor specialized for AI calculations using an AI neural network, and each layer of the AI neural network may be implemented by hardware (e.g., silicon). In this case, the NPU is designed to be specialized according to specifications required by a company and thus a degree of freedom thereof is lower than that of the CPU or the GPU but the NPU is capable of efficiently processing AI operations. The NPU that is a processor specialized for AI intelligence operations may be embodied in various forms such as a tensor processing unit (TPU), an intelligence processing unit (IPU), and a vision processing unit (VPU). An AI processor is not limited to the above-described examples unless it is specified as the NPU described above.

The one or more processors may be implemented as a system-on chip (SoC). In this case, the SoC may further include a memory and a network interface such as a bus for data communication between the processor and the memory, as well as the in addition to one or more processors.

When a SoC included in the electronic device 100 includes a plurality of processors, the electronic device 100 may perform AI-related operations (e.g., operations related to training an AI model or interference) by using some of the plurality of processors. For example, the electronic device may perform the AI-related operations by using at least one of a GPU, an NPU, a VPU, a TPU or a hardware accelerator specialized for the AI-related operations, such as a convolution operation and a matrix multiplication operation, among the plurality of processors. However, the above description is only an example and the AI-related operations may be processed using a general-purpose processor such as a CPU.

In addition, the electronic device may perform the AI-related operations by using a multi-core (e.g., a dual-core, a quad-core or the like) included in one processor. In particular, the electronic device may perform the AI-related operations such as a convolution operation and a matrix multiplication operation in parallel by using the multi-core included in the processor.

The one or more processors control input data to be processed according to a predefined operation rule stored in memory or an artificial intelligence model. The predefined operation rule or the artificial intelligence model may be made by learning.

Here, the providing of the predefined operation rule of the AI model through learning may be understood to mean that predefined operation rules or an AI corresponding to desired features are obtained by applying a learning algorithm to pieces of training data. Such learning may be made by a device that performs AI according to the disclosure or by a separate server/system.

The artificial intelligence model may include a plurality of neural network layers. At least one weight value is assigned to at least one layer, and an operation of the layer is performed through a result of an operation of a previous layer and at least one defined operation. Examples of the neural network of the disclosure include a convolutional neural network (CNN), a deep neural network (DNN), a recurrent neural network (RNN), a restricted Boltzmann machine (RBM), a deep belief network (DBN), a bidirectional recurrent deep neural network (BRDNN), a deep Q-networks, and a transformer but are not limited thereto unless specified otherwise.

The learning algorithm is a method of training a certain target device (e.g., a robot) using pieces of training data such that the target device may make decisions or predictions by itself. Examples of the learning algorithm may include supervised learning, unsupervised learning, semi-supervised learning, or reinforcement learning but are not limited thereto unless specified otherwise.

Examples in which identification information and setting information are mapped to each other and an operation corresponding to the mapped setting information is performed have been described above. A control method of an electronic device will be described below.

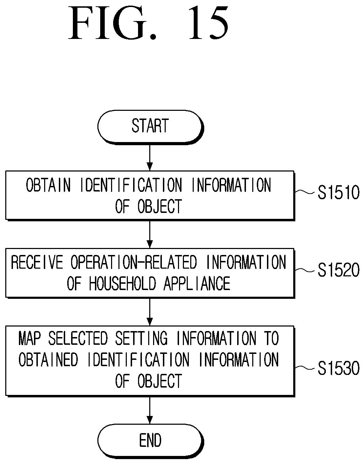

FIG. 15 is a flowchart of a control method of an electronic device according to one or more embodiments of the disclosure.

Referring to FIG. 15, the electronic device may obtain identification information of an object (S1510). Examples of the object may include clothes, food, and the like. The identification information may include barcode, quick response (QR) code, PDF417, CODE 16K, a data matrix, maxi code, color code, 3D code or the like, and be displayed on a region of the object. The electronic device may obtain identification information of one object, and sequentially obtain pieces of identification information of a plurality of objects.

The electronic device may receive operation-related information of a household appliance (S1520). For example, the operation-related information of the household appliance may include setting information, course information, time information, etc. related to an operation of the household appliance. Alternatively, the operation-related information may include information related to components of the object.

The electronic device may map selected setting information to the obtained identification information of the object (S1530). The electronic device may map setting information selected by a user from among the operation-related information of the household appliance to the identification information. For example, when the object is clothes, the electronic device may map standard course setting information of a washing machine to identification information of the clothes. When the object is frozen food, the electronic device may map a defrosting course setting information of a microwave to identification information of the frozen food.

One or more pieces of setting information may be selected. The electronic device may map the selected one or more pieces of setting information to the identification information. Alternatively, the electronic device may obtain information input by a user after the identification information is obtained. The electronic device may map the obtained input information to the identification information. For example, the input information obtained from the user may include text, an image, sound information, or the like. When the electronic device obtains identification information of each of a plurality of objects, the selected setting information may be mapped as common information to the identification information of each of the plurality of objects.

After the setting information or the like is mapped to the identification information, the electronic device may obtain the identification information of the object. When the identification information of the object is obtained after the mapping of the setting information to the identification information, the electronic device may transmit a command to perform an operation corresponding to the mapped setting information to the household appliance. When pieces of setting information are mapped to the identification information, the electronic device may sort out and output the pieces of the mapped setting information. For example, the electronic device may output the pieces of setting information after sorting out them according to registration time, usage history (e.g., frequency of use, recent usage record, etc.), and items (e.g., the type of the household appliance, the type of input information, etc.). When the electronic device includes a display, the electronic device may display the pieces of setting information on the display.

When obtaining identification information of a plurality of objects, the electronic device may identify common information mapped to the identification information of the plurality of objects and output the identified common information. When pieces of common information are identified, the electronic device may sort out and output the pieces of common information. When no common information is mapped to the identification information of the plurality of objects, the electronic device may output a message inquiring whether to register common information.

The electronic device may map both an image of the object and the setting information of the household appliance to the identification information, and transmit a command to perform an operation related to the mapped setting information of the household appliance to the household appliance when the image of the object is selected.

In addition, the electronic device may train a neural network model that identifies components of an object, based on the identification information, the setting information, or collected related information. The electronic device may identify the components of the object by using the neural network model trained based on the identification information or the setting information mapped to the identification information. When obtaining identification information of a plurality of objects, the electronic device may identify components of each of the plurality of objects by using the trained neural network model. The electronic device may output a notification message to the user on the basis of the identified components of the object.

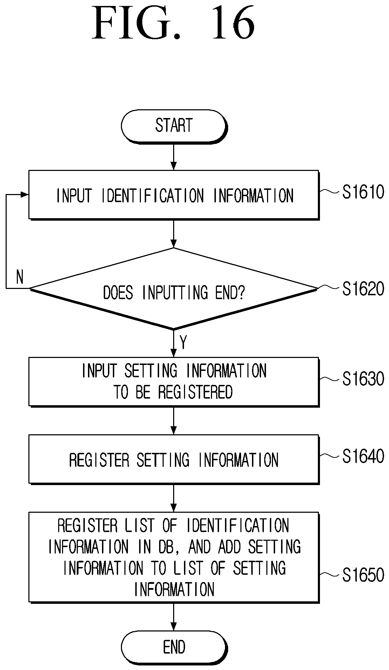

FIG. 16 is a flowchart of a process of registering setting information according to one or more embodiments of the disclosure.

Referring to FIG. 16, an electronic device may receive identification information (S1610). For example, the electronic device may scan the identification information using a scanner. Alternatively, the electronic device may capture the identification information using a camera.

The electronic device may determine whether inputting of the identification information ends (S1620). When the inputting of the identification information does not end, the electronic device may receive another piece of identification information (S1610). When the inputting of the identification information ends, the electronic device may receive setting information to be registered (S1630). For example, the setting information may be a piece of operation-related information of the electronic device. Alternatively, the setting information may be information input by a user. The information input by the user may include text, an image, sound information, or the like.

The electronic device may register the setting information (S1640). For example, the electronic device may map the received setting information to the identification information. A process of mapping the setting information to the identification information by the electronic device may be referred to as a registration process.

The electronic device may register a list of identification information in a database (or a memory), and add setting information to the list of setting information (S1650). For example, the identification information may include barcode, QR code, or the like. The electronic device may store the identification information of an object in a database. In addition, the electronic device may store the setting information mapped to the identification information in the list of setting information. The electronic device may store mapping information of the identification information and the setting information.

Through the above-described process, the electronic device may register setting information by mapping the setting information to identification information, and manage the identification information and the setting information.

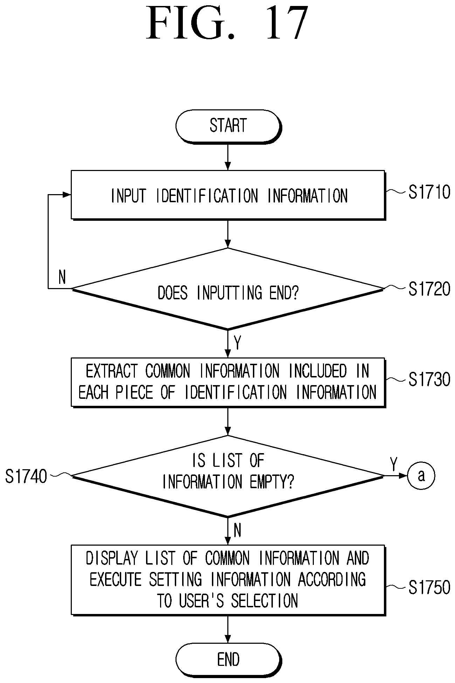

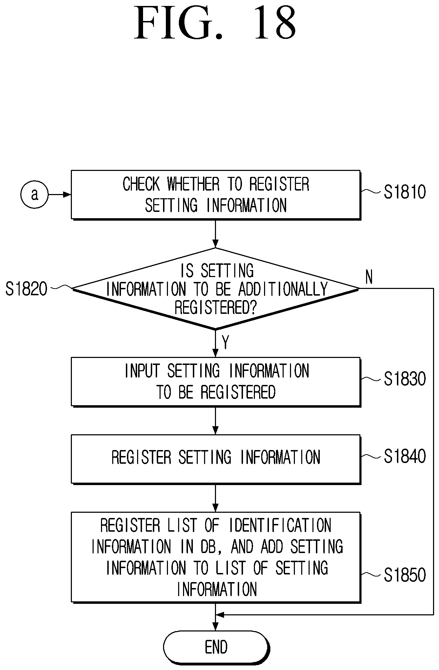

FIGS. 17 and 18 are flowcharts of a process of operating a household appliance according to setting information according to one or more embodiments of the disclosure. FIGS. 17 and 18 will be described together below. FIGS. 17 and 18 may be flowcharts of the process performed by an electronic device after setting information is registered by being mapped to identification information.

Referring to FIGS. 17 and 18, the electronic device may obtain identification information (S1710). For example, the electronic device may scan the identification information using a scanner. Alternatively, the electronic device may capture the identification information using a camera.

The electronic device may determine whether inputting of the identification information ends (S1720). When the inputting of the identification information does not end, the electronic device may receive another piece of identification information (S1710). When the inputting of the identification information ends, the electronic device may extract setting information mapped to the identification information . In this case, when receiving pieces of identification information, the electronic device may extract common information included in the pieces of identification information (S1730). For example, the common information may be understood as the same setting information mapped to the pieces of identification information.

The electronic device may determine whether an information list is empty (S1740). That is, the electronic device may determine whether there is common information mapped to the pieces of identification information. When the information list includes information (when there is common information), the electronic device may display the common information. When there are pieces of common information, the electronic device may display a list of common information. Next, the electronic device may execute the setting information according to a user's selection (S1750). That is, the electronic device may transmit a command to perform an operation corresponding to the selected setting information to a household appliance.

When the information list does not include information (when there is no common information), the electronic device may check whether to register setting information (S1810). For example, the electronic device may output a message inquiring whether to register setting information. The electronic device may determine whether to additionally register setting information (S1820). That is, when a user rejects the registration of the setting information, the electronic device may end the registration process. When the user approves the registration of the setting information, the electronic device may receive the setting information to be registered (S1830). For example, the setting information may be a piece of operation-related information of the electronic device. Alternatively, the setting information may be information input by a user. The information input by the user may include text, an image, sound information, or the like.

The electronic device may register the setting information (S1840). Thereafter, the electronic device may register a list of identification information in a database (or a memory), and add setting information to the list of identification information (S1850). The registration process of the setting information may be substantially the same as the process described above with reference to FIG. 16.

Effects of the disclosure are not limited the effects described above, and other effects that are not described herein will be apparent to those of ordinary skill in the art from the above description.

The control methods of an electronic device according to one or more of the embodiments described above may be provided through a computer program product. The computer program product may be a software (S/W) program or may include a non-transitory computer-readable medium storing the S/W program.

The non-transitory computer-readable medium should be understood as a medium that stores data semi-permanently and that is readable by a machine rather than a medium, e.g., a register, a cache or a memory, that stores data for a short time. Specifically, various applications or programs as described above may be provided by being stored in a non-transitory computer-readable recording medium such as a CD, a DVD, a hard disk, a Blu-ray disk, a USB, a memory card, a ROM, or the like.

While embodiments of the disclosure have been illustrated and described herein, the disclosure is not limited thereto and various modifications may be made therein by those of ordinary skill in the art without departing from the gist of the disclosure as claimed in the accompanying claims. These modifications should not be understood separately from the scope and spirit of the disclosure.

## Claims

1. An electronic device comprising:
a communication interface; and
at least one processor configured to:
obtain identification information of an object,
control the communication interface to obtain operation-related information of a household appliance, and
map setting information selected from among the operation-related information of the household appliance to the identification information of the object.

2. The electronic device of claim 1,
wherein the selected setting information comprises at least one piece of setting information, and
wherein the at least one processor is further configured to:
obtain input information related to the object, and
map the input information related to the object and the at least one piece of setting information to the identification information of the object.

3. The electronic device as claimed in claim 1, wherein the at least one processor is further configured to obtain pieces of identification information of a plurality of objects including the object, and map the selected setting information as common information to the pieces of identification information of the plurality of objects.

4. The electronic device of claim 3, wherein the at least one processor is further configured to identify the common information mapped to the pieces of identification information of the plurality of objects and output the identified common information.

5. The electronic device of claim 4, wherein the at least one processor is further configured to, based on an absence of common information mapped to the pieces of identification information of the plurality of objects, output a message inquiring whether to register common information.

6. The electronic device of claim 1, wherein the at least one processor is further configured to, based on the mapped setting information being included in the identification information, control the communication interface to transmit, to the household appliance, a command to perform an operation corresponding to the mapped setting information.

7. The electronic device of claim 2, further comprising a display,
wherein the at least one processor is further configured to control the display to display the mapped setting information and the mapped input information.

8. The electronic device of claim 7,
wherein the input information related to the object comprises an image of the object, and
wherein the at least one processor is further configured to:
based on selection of the image of the object from among the mapped input information and the mapped setting information, control the communication interface to transmit, to the household appliance, a command to perform an operation corresponding to the mapped setting information.

9. The electronic device of claim 2, further comprising a camera,
wherein the at least one processor is further configured to control the camera to obtain the identification information of the object.

10. The electronic device of claim 9,
wherein the input information related to the object comprises an first image of the object, and
wherein the at least one processor is further configured to:
control the camera to capture a second image of the object, and
based on matching the second image with the first image, control the communication interface to transmit a command to perform an operation corresponding to the mapped setting information.

11. The electronic device of claim 2, further comprising a display,
wherein the at least one processor is further configured to control the display to display the mapped setting information and the mapped input information.

12. The electronic device of claim 1, wherein the at least one processor is further configured to delete the mapped setting information a predetermined amount of time after the mapped setting information is mapped to the identification information.

13. The electronic device of claim 2,
wherein the operation-related information of the household appliance comprises component information, and
wherein the at least one processor is further configured to train a neural network model to identify the component information based on the operation-related information of the household appliance and the mapped setting information and the mapped input information.

14. The electronic device as claimed in claim 13, wherein the at least one processor is further configured to identify the component information of the object using the trained neural network model based on the identification information of the object.

15. A method of controlling an electronic device, the method comprising:
obtaining identification information of an object;
receiving operation-related information of a household appliance; and
mapping setting information selected from among the operation-related information of the household appliance to the identification information of the object.
